Europäisches Patentamt

(19) European Patent Office

Office européen des brevets

(11) Veröffentlichungsnummer: **0 003 113**
A1

(12) **EUROPÄISCHE PATENTANMELDUNG**

(21) Anmeldenummer: 79100033.4

(22) Anmeldetag: 08.01.79

(51) Int. Cl.²: **D 21 G 1/00**
F 16 C 13/00

(30) Priorität: 14.01.78 DE 2801556

(43) Veröffentlichungstag der Anmeldung:
25.07.79 Patentblatt 79/15

(84) Benannte Vertragsstaaten:
DE FR GB IT

(71) Anmelder: BASF Aktiengesellschaft
Carl-Bosch-Strasse 38
D-6700 Ludwigshafen(DE)

(72) Erfinder: Schoettle, Klaus
Ladenburger Strasse 70
D-6900 Heidelberg(DE)

(72) Erfinder: Wittkamp, Heinrich
Staudenweg 33
D-6800 Mannheim 34(DE)

(72) Erfinder: Lechner, Hilmar
Comeniusstrasse 22
D-6700 Ludwigshafen(DE)

(54) **Kalander zum Satinieren von Magnetbändern.**

(57) Kalander zum Satinieren von Magnetbändern mit mindestens zwei in einem Gestellt drehbar gelagerten Walzen (1, 7), zwischen denen ein Walzenspalt gebildet ist und von denen eine Walze (1) in einem ortsfesten Lager (2) und die übrigen Walzen (7) in verschiebbaren Lagern (6) gehalten sind. Letztere können mittels hydraulisch verstellbarer Anpreßwalzen (9) gegen die ortsfeste Walze (1) verschoben werden, die gewöhnlich auch die angetriebene Walze ist. Bekannte Kalander dieser Art arbeiten mit Walzen großen Durchmessers, die abwechselnd aus Stahlvollwalzen und Walzen mit einem elastischen Belag bestehen. Beim neuen Kalander sind die den Walzenspalt bildenden Walzen (1, 7) Stahlvollwalzen mit feinstbearbeiteter metallischer Oberfläche, von denen die verschiebbar gelagerte Walze (7) einen kleinen Durchmesser besitzt und dadurch elastisch ist. Die Anpreßwalzen (9) sind mit einem elastischen Belag (10) ausgestattet.

Kalander zum Satinieren von Magnetbändern

Die Erfindung bezieht sich auf einen Kalander mit mindestens zwei in einem Gestell drehbar gelagerten Walzen, zwischen denen ein Walzenspalt gebildet ist und von denen eine Walze in einem ortsfesten Lager und die übrigen Walzen in Lagern gehalten sind, die in Führungen des Gestells in Abstandsrichtung der Walzen verschiebbar sind, sowie mit mindestens einer hydraulisch verstellbaren Anpreßwalze zum Verschieben der in den verschiebbaren Lagern gehaltenen Walzen gegen die ortsfeste Walze, wobei mindestens eine der Walzen mit einer Antriebsmaschine verbunden ist.

Bei der Herstellung von Magnetbändern, insbesondere von Bändern für Videoaufzeichnungen, werden die Folienbahnen nach dem Auftragen der magnetischen Schicht mit Hilfe eines Kalanders satiniert, um eine Schichtoberfläche mit möglichst geringer Rauhigkeit zu erhalten.

Aus der US-PS 3 369 483 ist hierfür ein Kalander der oben angegebenen Art bekannt, bei dem zwischen einer Gegendruckwalze und einer hydraulisch verstellbaren Anpreßwalze eine Reihe von in einem Gestell verschiebbaren Walzen übereinander angeordnet sind. Zum Ausgleich der Durchbiegung der Walzen infolge des Anpreßdruckes und der Schwankungen in

Sp/Fe

0003113

der Walzenoberfläche bestehen diese Walzen abwechselnd aus Stahlvollwalzen und Walzen mit einem elastischen Belag bzw. aus elastischen Walzen. Meist ist der elastische Belag aus vielen feinen, zusammengepreßten Papierlagen oder aus Kunststofflagen, beispielsweise aus Polyamid, aufgebaut. Solcher Art gestaltete Walzen haben wegen des lamellenartigen Aufbaus des Walzenmantels und wegen der schlechteren Bearbeitbarkeit der Oberfläche gegenüber der metallischen Oberfläche der Stahlvollwalzen eine erheblich schlechtere Oberflächengüte, die durch Inhomogenitäten des Materials und durch dessen relativ leichte Verprägbarkeit weiterhin beeinträchtigt werden kann. So können bei Stahlvollwalzen die Oberflächenrauhigkeit bis auf 0,01 um und die Welligkeit der Oberfläche bis auf 0,1 um herabgesetzt werden; bei Walzen mit Papieroberfläche liegen die tiefsten Werte für diese Größen bei 0,5 um bzw. 1,0 um.

Mit den bekannten Kalandriereinrichtungen können abhängig von der Dicke und Zusammensetzung der Magnetschicht bei optimalem Anpreßdruck der Walzen und Walzentemperaturen Oberflächenrauhigkeiten der Magnetschicht zwischen 0,05 und 0,15 um erreicht werden. In Laborversuchen mit schmalen Walzen wurde nachgewiesen, daß man diese Werte abhängig von der Magnetschicht nochmals um ein Vielfaches senken kann, wenn die Kalandrierspalte aus nur metallischen Walzenoberflächen gebildet sind. Eine Übertragung dieser Verhältnisse auf breite Produktionskalander gelang bisher jedoch nicht mit dem gleichen günstigen Ergebnis, da die dazu notwendigen Stahlwalzen mit großen Durchmessern eine zu geringe Elastizität haben, um z.B. Magnetbanddickenschwankungen und die Durchbiegung ausgleichen zu können.

0003113

Demgemäß besteht die Erfindungsaufgabe darin, einen Kalander für den großtechnischen Betrieb so zu konstruieren, daß die bisherigen Walzen mit elastischem Belag durch Metallvollwalzen ersetzt werden können.

Der erfindungsgemäße Kalander besteht aus einer großen und einer kleinen Walze, die den Walzenspalt bilden, wobei die große Walze ortsfest und die kleine Walze verschiebbar gelagert ist und der Durchmesser der kleinen Walze zwischen 15 und 70 mm, vorzugsweise zwischen 25 und 40 mm liegt. Die den Walzenspalt bildenden Walzen weisen eine feinstbearbeitete metallische Oberfläche auf. Die Anpreßwalzen sind mit einem elastischen Walzenmantel ausgestattet. Eine bevorzugte Ausführungsform besteht darin, daß die verschiebbaren Walzen durch jeweils zwei zu den Führungen der Walzenlager symmetrisch angeordnete Anpreßwalzen gestützt sind.

Die vorgeschlagene kleine Kalanderwalze kann den Unebenheiten und eventuellen Durchbiegungen der großen Walze und auch den Dickenschwankungen der Folienbahn durch ihren kleinen Durchmesser elastisch folgen. Dabei erfüllt der elastische Belag der Anpreßwalzen eine wichtige Funktion. Durch den Belag kann die kleine Walze ihre von der Oberflächenform der großen Walze erzwungene Form trotz des hohen Anpreßdruckes annehemen.

Mit diesen konstruktiven Maßnahmen sind die bisherigen bekannten Schwierigkeiten überwunden, bei Kalandern für einen Produktionsbetrieb sämtliche Kalanderwalzen als Metallvollwalzen auszuführen und damit die Kalanderspalte aus den hinsichtlich der Oberflächenrauhigkeit wesentlich günstigeren Metalloberflächen zu bilden.

0003113

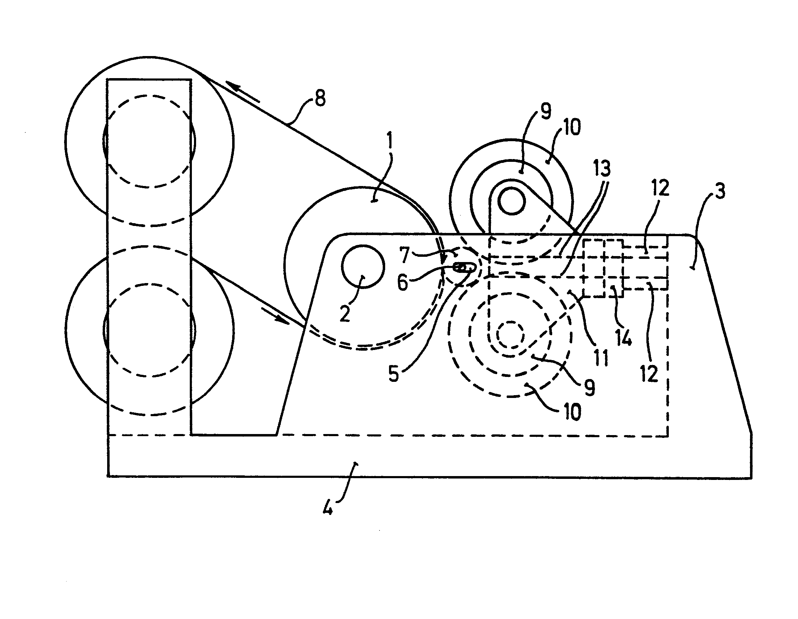

Der erfindungsgemäße Kalander ist nachfolgend anhand eines in der Zeichnung dargestellten Ausführungsbeispiels näher erläutert.

Die Zeichnung zeigt den Kalander für einen Walzenspalt in der Seitenansicht.

Ein Walze 1 mit einem Durchmesser zwischen 150 und 500 mm, vorzugsweise zwischen 200 und 300 mm, und einer Länge bis zu 700 mm ist in einem Lagerpaar 2, das in Seitenteilen 3 eines Gestells 4 befestigt ist, drehbar gehalten. Die Walze 1 besteht aus Stahl mit einer feinstbearbeiteten Oberfläche und ist in der üblichen Weise von einer nicht dargestellten Antriebsmaschine antreibbar. Wie bei herkömmlichen Kalandern wird sie vorzugsweise mit Wasserdampf oder Öl beheizt. In als Langloch 5 ausgebildeten Führungen der Seitenteile 3 ist ein weiteres Lagerpaar 6 in Richtung der Walze 1 verschiebbar, das eine gegenüber der Walze 1 kleine Kalanderwalze 7 mit einem Durchmesser zwischen 15 und 70 mm, vorzugsweise zwischen 25 und 40 mm, aufnimmt. Auch diese Walze kann angetrieben sein. Zwischen dieser Walze, die ebenfalls eine Stahlvollwalze ist und deren Oberfläche feinstbearbeitbar ist, und der Walze 1 ist der Walzenspalt gebildet, durch den die beschichtete Folienbahn 8 zum Satinieren der Oberfläche hindurchgeführt wird.

Der zum Kalandrieren bzw. Satinieren notwendige Druck der beiden Walzen 1 und 7 gegeneinander wird durch zwei Anpreßwalzen 9 erzeugt, die an der kleinen Walze 7 angreifen. Die Anpreßwalzen 9 sind mit einem elastischen Walzenmantel 10 zum Beispiel aus Papierlamellen, Baumwoll-Lamellen, Gemische beider Werkstoffe oder Kunststoffe, wie z.B. Polyamid, ausgestattet und in einem Rahmen 11 in symmetrischer Anordnung zur horizontalen Mittellinie des Langlochs 5 drehbar gelagert. Die beiden Seitenteile 3 weisen an den

0003113

einander zugekehrten Seiten horizontal verlaufende Führungsschienen 12 auf, auf denen der Rahmen 11 mit seinen Führungsleisten 13 in Richtung der Walzen 1, 7 verschiebbar ist. Als Antrieb für den Rahmen 11 dient ein hydraulischer Arbeitszylinder 14, dem über eine Leitung ein hydraulisches Druckmittel aus einer Pumpe (in der Zeichnung nicht dargestellt) zugeführt wird.

Anstelle des Rahmens 11 können mit den Seitenteilen 3 Schwenkarme verbunden sein, an deren freien Enden die Lager für die Anpreßwalzen 9 befestigt sind. Der hydraulische Arbeitszylinder 14 würde dann in der dem Fachmann bekannten Weise über gelenkig miteinander verbundene Hebel an den beiden Schwenkarmen angreifen. Selbstverständlich kann auch für jeden Schwenkarm jeweils ein Arbeitszylinder vorgesehen werden.

Versuche im technischen Maßstab haben gezeigt, daß der erfindungsgemäße Kalander besonders als Endstufe im Anschluß an herkömmliche Kalander zum abschließenden Hochvergüten der Oberfläche von mit einer Magnetschicht versehenen Folienbahnen geeignet ist.

Zeichn.

0003113

Patentansprüche

1. Kalander mit mindestens zwei in einem Gestellt drehbar gelagerten Walzen, zwischen denen ein Walzenspalt gebildet ist und von denen eine Walze in einem ortsfesten Lager und die übrigen Walzen in Lagern gehalten sind, die in Führungen des Gestells in Abstandsrichtung der Walzen verschiebbar sind, sowie mit mindestens einer hydraulisch verstellbaren Anpreßwalze zum Verschieben der in den verschiebbaren Lagern gehaltenen Walzen gegen die ortsfeste Walze, wobei mindestens eine der Walzen mit einer Antriebsmaschine verbunden ist, dadurch gekennzeichnet, daß die den Walzenspalt jeweils bildenden Walzen aus einer großen und einer kleinen Walze (1, 7) bestehen, wobei die große Walze (1) ortsfest und die kleine Walze (7) verschiebbar gelager ist und der Durchmesser der kleinen Walze (7) zwischen 15 und 70 mm, vorzugsweise zwischen 25 und 40 mm liegt, und daß die den Walzenspalt bildenden Walzen eine feinstbearbeitete metallische Oberfläche aufweisen, und die Anpreßwalzen (9) mit einem elastischen Walzenmantel (10) ausgestattet sind.

2. Kalander nach Anspruch 1, dadurch gekennzeichnet, daß die verschiebbaren Walzen (7) durch jeweils zwei zu den Führungen (5) der Walzenlager (6) symmetrisch angeordnete Anpreßwalzen (9) gestützt sind.

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - B - 1 111 003 (RAMISCH) <br> * Ganz * | 1,2 | D 21 G 1/00 <br> F 16 C 13/00 |
| | BE - A - 369 260 (VERGE) <br> * Ganz * | 1,2 | |
| A | US - A - 3 204 552 (BEACHLER et al.) <br> * Ganz * | 1 | |
| A | DE - C - 209 342 (BEMBERG) <br> * Ganz * | 1 | **RECHERCHIERTE SACHGEBIETE (Int. Cl.²)** <br> D 21 G <br> D 06 C <br> F 16 C |
| A | CH - A - 359 021 (KUESTERS) <br> * Ganz * | 1 | |
| A | DE - B - 1 238 322 (KMW) <br> * Ganz * | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 19-04-1979 | DE RIJCK |

EPA form 1503.1   06.78